# EUROPÄISCHE PATENTSCHRIFT

(11) **EP 0 758 917 B1**
(45) Veröffentlichungstag und Bekanntmachung des Hinweises auf die Patenterteilung: **04.03.1998**
(21) Anmeldenummer: 95906346.2
(22) Anmeldetag: 25.01.1995
(51) Int. Cl.: B01F 5/04

(54) **STATISCHER MIKRO-VERMISCHER**
STATIC MICROMIXER
MICROMELANGEUR STATIQUE

(30) Priorität: 09.05.1994 DE 4416343
(43) Veröffentlichungstag der Anmeldung: 26.02.1997
(73) Patentinhaber: Forschungszentrum Karlsruhe GmbH, 76133 Karlsruhe (DE)
(72) Erfinder: SCHUBERT, Klaus, 76227 Karlsruhe (DE); BIER, Wilhelm, 76344 Eggenstein-Leopoldshafen (DE); LINDER, Gerd, 76149 Karlsruhe (DE); SEIDEL, Dieter, 76344 Eggenstein-Leopoldshafen (DE)
(74) Vertreter: Rückert, Friedrich, Dr.
(86) Internationale Anmeldenummer: EP9500251
(87) Internationale Veröffentlichungsnummer: WO9530475

(56) Entgegenhaltungen:
- EP-A- 0 260 736
- DE-C- 732 632
- FR-A- 1 261 312
- GB-A- 612 012
- GB-A- 2 073 604

## Beschreibung

Die Erfindung betrifft einen statischen Vermischer mit wenigstens einer Mischkammer mit vorgeschaltetem Führungsbauteil zur Zufuhr der zu mischenden Stoffe gemäß dem Oberbegriff von Anspruch 1.

Aus der DE-31 14 195 C2 ist eine Mischvorrichtung in Gestalt eines Kanalkörpers bekannt, der durch Aufeinanderstapeln von rechteckigen oder quadratischen Einzelwelleinheiten gebildet wird, die durch Verleimung, Schweißung oder dergleichen miteinander verbunden werden. Die gewünschte Gestalt des Kanalkörpers kann auch durch gesonderten Zuschnitt jeder Einzelwelleinheit hergestellt werden. Die Einzelwelleinheiten sind aus miteinander fest verbundenen, ebenen Trennwänden und Wellbogen zusammengesetzt, wobei die Wellungen der Wellbogen benachbarter Einzelwelleinheiten in einem Winkel zueinander verlaufen. In einem Ausführungsbeispiel ist die Anordnung so getroffen, daß der Kanalkörper von den Einzelwelleinheiten gebildete, gleich lange, parallele Kanäle hat, die sich von den an zwei Einlaßkanäle angeschlossenen Einlaßseiten des Kanalkörpers zu dessen in den Auslaßkanal angeschlossene Auslaßseite erstrecken. Da der Kanalkörper aus aufeinander aufgeschichteten Einzelwelleinheiten aufgebaut ist, von denen jede zweite abwechselnd an den zugehörigen Einlaßkanal anzuschließen ist, aus denen das Medium somit nur in jeden zweiten Kanal, in der Höhenerstreckung des Kanals gesehen, einströmt, muß der Einlaß zu der dazwischenliegenden Einheit geschlossen sein (siehe Spalte 6, Zeilen 10 bis 34). Das Ausformen oder Anbringen der erforderlichen Verschlüsse ist sehr aufwendig. Von solchen Verschlüssen in Verbindung mit Wellbogen kann auch keine Vakuumdichtheit oder besondere Druckfestigkeit erwartet werden, wie sie in der chemischen Prozeßtechnik gemeinhin verlangt werden.

Aus der WO 91/16970 A1 (PCT/CH91/00109 vom 14.11.1991) ist eine Mischeranordnung in einer Kolonne mit Misch-, Katalysator- bzw. Kanalelementen bekannt, die in Schichten oder Lagen angeordnet sein können. Benachbarte Elemente innerhalb einer Lage oder Schicht und aufeinanderfolgende Elemente benachbarter Schichten sind gegeneinander bzw. abwechselnd zur Hauptströmungsrichtung geneigt angeordnet. Die Elemente können plattenartig ausgebildet sein und haben parallel zueinander verlaufende Kanäle. Dadurch wird der Strömungswiderstand vermindert; in den Bereichen des Übergangs von den Kanalelementen in den Kolonnenraum wird die Mischwirkung durch Turbulenzen und die Vereinigung der verschiedenen Teilströme angeregt. Die Mischelemente bzw. deren Kanäle können ganz oder teilweise als Katalysatoren ausgebildet sein zum verbesserten Ablauf katalytischer Reaktionen.

Ausgehend von dem eingangs erörterten Stand der Technik hat die Erfindung zur Aufgabe, bei einem statischen Vermischer der gattungsgemäßen Art die Fertigung zu vereinfachen und die Vermischungszeiten in noch stärkerem Maße zu verkürzen; bei chemisch miteinander reagierenden Fluiden soll eine vollständige Reaktion der Fluide erzielt und die Reaktionswärme effektiv und schnellstmöglich ab- oder zugeführt werden können. Außerdem soll der Vermischer hinsichtlich der Kanäle eine vakuumdichte und druckfeste Konstruktion ermöglichen.

Diese Aufgabe wird mit den kennzeichnenden Merkmalen von Anspruch 1 gelöst. Die hierauf bezogenen Unteransprüche beinhalten vorteilhafte Weiterbildungen dieser Lösung.

Mit der Erfindung werden die zu vermischenden Fluide reihenweise und "auf Lücke" in eine Vielzahl feinster, extrem eng benachbarter Stromfäden unterteilt, die, beim Eintritt in die Mischkammer zusammengeführt, ein gemeinsames, entsprechend eng begrenztes Volumen ausfüllen und sich dadurch auf schnellstem und kürzestem Weg durchmischen können. Die Dichte der Kanalmündungen und damit der Stromfäden am Eintritt in die Mischkammer beträgt einige tausend Mündungen bzw. Stromfäden pro cm².

Der erfindungsgemäße Mikro-Vermischer ermöglicht die Herstellung einer (physikalischen) Mischung zweier oder mehrerer Fluide. Mit einem angeschlossenen Mikrowärmeüberträger lassen sich auch chemisch miteinander reagierende Fluide vermischen; die dabei auftretende (exotherme Reaktionen) oder benötigte (endotherme Reaktionen) Reaktionswärme wird durch den Mikrowärmeüberträger abgeleitet oder zugeführt.

Ausführungsbeispiele der Erfindung werden im folgenden anhand der Zeichnungen erläutert:
Die Fig. 1a zeigt mehrere, zu stapelnde Folien;
die Fig. 1b und 1c zeigen zwei Ansichten eines Führungsbauteils aus Folien gemäß Figur 1a;
die Fig. 1d zeigt schematisch den Strömungsverlauf in einem Mikro-Vermischer;
die Fig. 2a und 2b zeigen schematisch einen Mikro-Vermischer mit kühl- oder heizbarem Führungsbauteil;
die Fig. 3a zeigt im Schnitt einen Mikro-Vermischer, an dessen Mischkammer ein Wärmeüberträger angeschlossen ist;
Fig. 3b zeigt einen Mikro-Vermischer mit einer als Wärmeüberträger ausgebildeten Mischkammer.

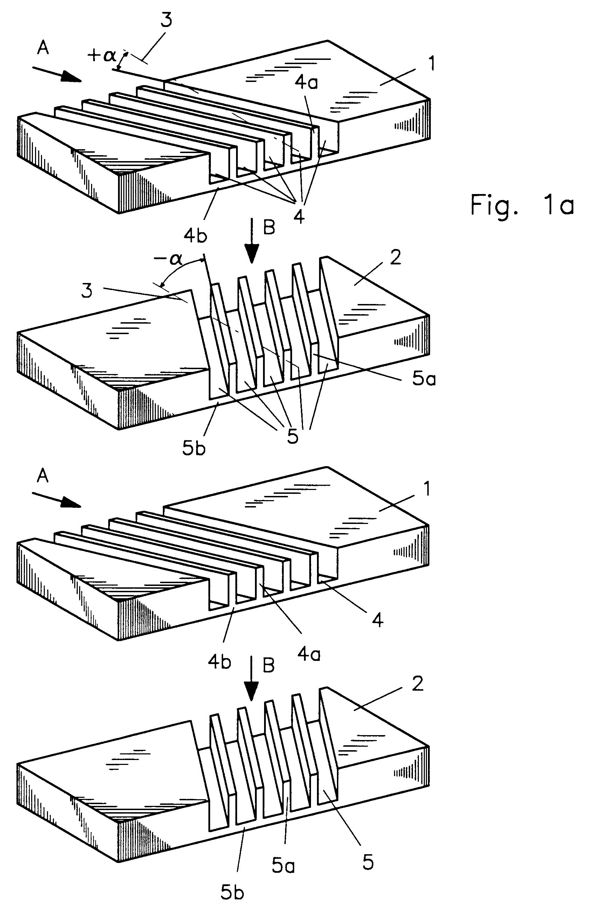

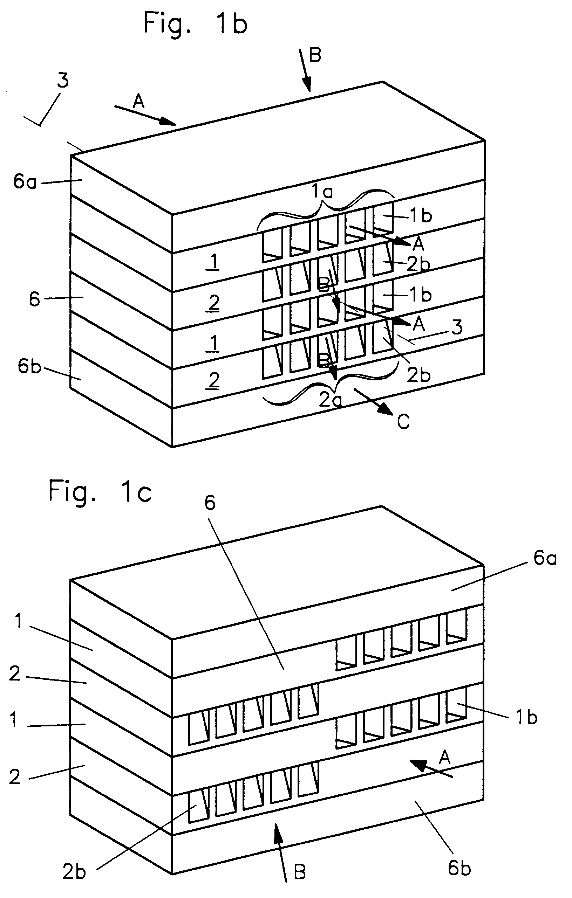

Die Folien 1 bzw. 2 gemäß Fig. 1a haben eine Dicke von ca. 100 µm bei einer Länge und Breite im Millimeterbereich. Die Foliensorte 1 ist von einer Schar vorzugsweise paralleler, eng benachbarter und schräg zur Vermischerlängsachse 3 verlaufender Nuten 4 durchzogen, die von hinten links beginnend gegenüber dieser Achse 3 einen spitzen Winkel +α haben und im mittleren Bereich der vorderen Folienlängsseite münden. Die Foliensorte 2 ist in derselben Art und Weise von Nuten 5 durchzogen, jedoch beträgt hier der Winkel zwischen Nutenlängsachse und Vermischerlängsachse -α; d. h. die Nuten 5 verlaufen von rechts hinten zum mittleren Bereich der vorderen Folienlängsseite. Der Betrag des Winkels muß jedoch nicht der gleiche sein. Die Nuten 4, 5 können mit Formdiamanten eingearbeitet werden und haben vorzugsweise eine Breite von < 100 µm, eine Tiefe von 70 µm bei einer Stärke der Zwischenstege 4a, 5a von 15 µm; die Stärke der Nutböden 4b, 5b beträgt 30 µm.

Die für die Herstellung von Mikro-Nuten unterschiedlichster Querschnitte erforderlichen Werkzeuge und Vorrichtungen sind z. B. in der DE 37 09 278 C2 dargestellt und beschrieben. Die Pfeile A und B symbolisieren die Strömungsrichtungen der zu mischenden Fluide A und B.

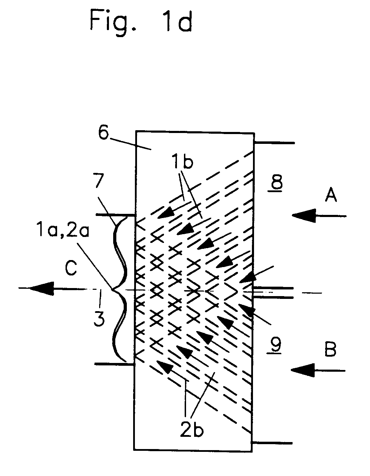

Für die Herstellung eines Führungsbauteils 6 werden die Foliensorten 1 und 2 abwechselnd übereinandergeschichtet, mit einer oberen und einer unteren Deckplatte 6a, 6b versehen und z. B. mittels Diffusionsschweißen zu einem homogenen, vakuumdichten und druckfesten Mikrostrukturkörper verbunden. Wie aus Fig. 1b zu ersehen ist, liegen die von den Folien 1 und 2 gebildeten Reihen 1a, 2a der Kanäle 1b bzw. 2b mit ihren an die Mischkammer 7 angrenzenden Mündungen fluchtend übereinander (s. a. Fig. 1d).

Diese Reihen 1a, 2a bilden einen gemeinsamen, z. B. quadratischen Querschnitt mit einer Dichte von ca. fünftausend Mündungen pro cm², die an die gemeinsame Mischkammer 7 angrenzen. Die Figur 1c zeigt das Führungsbauteil 6 von der Zuströmseite der Fluide A und B aus gesehen. Wie hieraus und aus der Draufsicht gemäß Fig. 1d zu ersehen ist, divergieren die zur Längsachse 3 schräg verlaufenden Kanäle 1b, 2b von der Mischkammer 7 aus abwechselnd zur Fluideintrittsseite hin so, daß die Fluide A und B über je eine Eintrittskammer 8 und 9 getrennt dem Führungsbauteil 6 eingespeist werden können. Nach dem Austritt aus dem Führungsbauteil 6 werden die feinen Stromfäden der Fluide A und B innig miteinander vermischt und bilden in der Mischkammer 7 eine gemeinsame Strömung C.

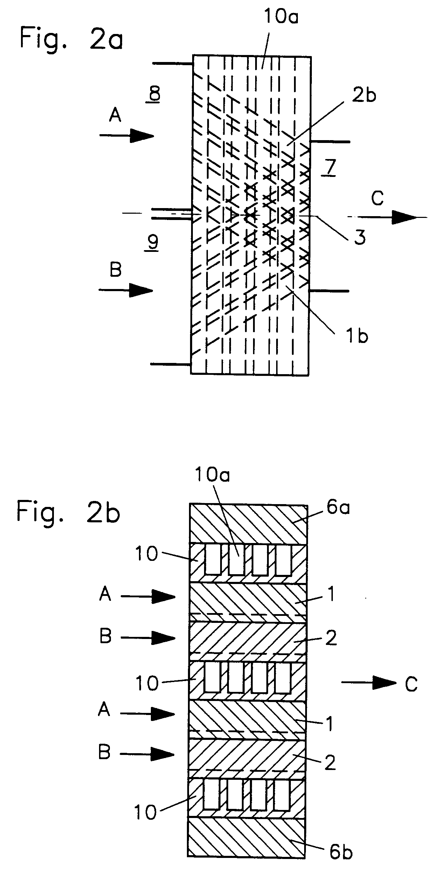

Die Figuren 2a und 2b zeigen eine Variante, bei der zwischen zwei Foliensorten 1 und 2 bzw. zwischen die Folien und die Deckplatten 6a, 6b Zwischenfolien 10 geschaltet sind, die senkrecht zur Längsachse 3 verlaufende Nuten 10a aufweisen zur Durchleitung eines Kühl- oder Heizmittels. Dadurch kann die Vermischungszeit und die Reaktionsgeschwindigkeit der Fluide A und B beeinflußt werden.

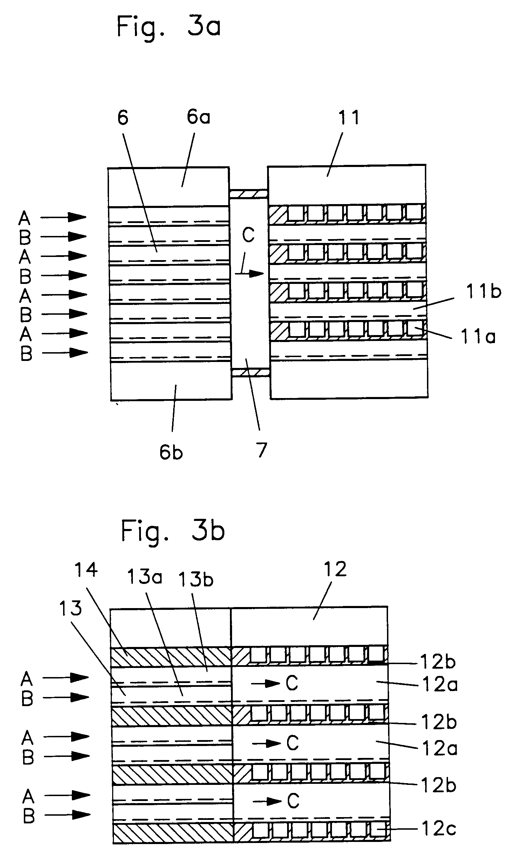

In Fig. 3a ist ein Führungsbauteil 6 entsprechend den Figuren 1a und 1d im Schnitt dargestellt mit angeschlossener Mischkammer 7. An diese Mischkammer ist ein Wärmeüberträger 11 angeschlossen, der ähnlich wie die Variante gemäß Figuren 2a und 2b von quer zur Strömungsrichtung C verlaufenden Kanälen 11a durchzogen ist zur Ab- bzw. Zufuhr der Reaktionswärme aus bzw. zu den Kanälen 11b.

In Fig. 3b ist der Wärmeüberträger 12 direkt an das Führungsbauteil 13 angeschlossen. Dabei ist die Anordnung durch Distanzfolien 14 so getroffen, daß je zwei übereinanderliegende Kanäle 13a, 13b für die Fluide A, B je in einen gemeinsamen Teilmischraum 12a des Wärmeüberträgers ausmünden, wobei diese Teilmischräume 12a an Folien 12b angrenzen, die quer zur Strömungsrichtung C verlaufende Kanäle 12c aufweisen.

Diese Kanäle 12c führen ein Kühl- oder Heizmittel, mit dem bezüglich der Misch- und Reaktionszonen 12a Wärme ab- oder zugeführt werden kann.

## Patentansprüche

1. Statischer Vermischer mit wenigstens einer Mischkammer (7) und einem vorgeschalteten Führungsbauteil (6) für die Zufuhr von zu mischenden Fluiden (A, B) zu der Mischkammer (7), wobei das Führungsbauteil (6) aus mehreren übereinandergeschichteten Elementen (1, 2) zusammengesetzt ist, die von schräg zur Mikro-Vermischer-Längsachse (3) verlaufenden Kanälen (1b, 2b) durchzogen sind, und wobei die Kanäle (1b, 2b) benachbarter Elemente (1, 2) sich berührungslos kreuzen und in die Mischkammer (7) ausmünden; dabei liegen die von den übereinandergeschichteten Elementen (1, 2) gebildeten Reihen (1a, 2a) der Kanäle (1b, 2b) mit ihren an die Mischkammer (7) angrenzenden Mündungen fluchtend übereinander und bilden dort einen gemeinsamen Querschnitt, wobei die Reihen (1a, 2a) von Kanälen (1b, 2b) benachbarter Elemente (12) von dem gemeinsamen Querschnitt zur Fluideintrittsseite des Führungsbauteils (6) hin so divergieren, daß die zu vermischenden Fluide (A und B) getrennt einspeisbar sind, gekennzeichnet durch folgende Merkmale:
a) die Elemente für das Führungsbauteil (6) bestehen aus dünnen Folien (1, 2) mit einer Dicke von ca. 100 µm bei einer Länge und Breite im Millimeterbereich, in die je eine Schar eng benachbarter, mit abwechselnder Schräge zur Mikro-Vermischer-Längsachse (3) verlaufender Nuten (4, 5) eingearbeitet ist, die von je einer Folienlängsseite beginnend im mittleren Bereich der gegenüberliegenden Folienlängsseite münden, so daß beim Übereinanderschichten der Folien (1, 2) je eine Reihe (1a bzw. 2a) geschlossener Kanäle (1b, 2b) für die Führung der zu mischenden Fluide (A, B) entsteht;
b) die Nuten (4, 5) haben Breiten von < 250 µm bei Wanddicken der Zwischenstege (4a, 5a) und Nutböden (4b, 5b) von < 70 µm, so daß die im mittleren Bereich an die Mischkammer (7) angrenzenden Mündungen der Kanäle (1b, 2b) eine Dichte von einigen tausend pro cm² besitzen;
c) die übereinandergeschichteten Folien (1, 2) sind mit einer oberen und/oder einer unteren Deckplatte (6a, 6b) versehen und zu einem homogenen, vakuumdichten und druckfesten Mikrostrukturkörper verbunden.

2. Vermischer nach Anspruch 1, dadurch gekennzeichnet, daß zwischen je zwei Folien (1, 2) mit den schrägen, zur Fluideintrittsseite divergierenden Nuten eine Zwischenfolie (10) geschaltet ist, die senkrecht zur Mikro-Vermischer-Längsachse (3) verlaufende Nuten (10a) aufweist zur Durchleitung eines Kühl- oder Heizmittels.

3. Vermischer nach Anspruch 1 oder 2, dadurch gekennzeichnet, daß an die Mischkammer (7) ein Mikrowärmeüberträger (11) angeschlossen ist, der von quer zur Strömungsrichtung (C) verlaufenden Kanälen (11a) durchzogen ist zur Ab- bzw. Zufuhr der Reaktionswärme aus bzw. zu dessen dazwischenliegenden Kanälen (11b).

4. Vermischer nach Anspruch 1 oder 2, dadurch gekennzeichnet, daß die Mischkammer als Mikrowärmeüberträger (12) ausgebildet ist, der unmittelbar an das Führungsbauteil (13) angeschlossen ist und der quer zur Strömungsrichtung (C) verlaufende Kanäle (12c) in an Teilmischräume (12a) angrenzenden Folien (12b) aufweist zur Führung eines Kühl- oder Heizmittels.

## Claims

1. Static mixer, including at least one mixing chamber (7) and a guide component (6) connected upstream thereof for supplying fluids (A, B), which are to be mixed, to the mixing chamber (7), the guide component (6) comprising a plurality of elements (1, 2), which are arranged in layers above one another and are traversed by channels (1b, 2b) extending inclinedly relative to the longitudinal axis (3) of the micromixer, and the channels (1b, 2b) of adjacent elements (1, 2) contactlessly intersecting and terminating in the mixing chamber (7); the rows (1a, 2a) of channels (1b, 2b), which are formed from the elements (1, 2) arranged in layers above one another, thereby lie above one another so that their openings, juxtaposed to the mixing chamber (7), are in alignment and form there a common cross-section, the rows (1a, 2a) of channels (1b, 2b) of adjacent elements (1, 2) diverging from the common cross-section towards the fluid inlet side of the guide component (6) so that the fluids (A and B) which are to be mixed can be fed-in separately, characterised by the following features:
a) the elements for the guide componment (6) comprise thin foils (1, 2) having a thickness of approx. 100 µm with a length and width in the millimetre range, each foil having a number of closely adjacent grooves (4, 5) provided therein, which grooves extend with alternate inclinations relative to the longitudinal axis (3) of the micromixer and, commencing from one particular longitudinal side of the foil, terminate in the central region of the oppositely situated longitudinal side of the foil so that, when the foils (1, 2) are arranged in layers above one another, each row (1a or 2a) of closed channels (1b, 2b) is produced for the guidance of the fluids (A, B) which are to be mixed;
b) the grooves (4, 5) have widths of < 250 µm with wall thicknesses of the intermediate webs (4a, 5a) and groove bases (4b, 5b) of < 70 µm, so that the openings of the channels (1b, 2b) abutting against the mixing chamber (7) have, in the central region, a density of some thousand per cm²;
c) the foils (1, 2), which are arranged in layers above one another, are provided with an upper and/or a lower cover plate (6a, 6b) and are joined to form a homogeneous, vacuum-tight and pressure-resistant microstructure body.

2. Mixer according to claim 1, characterised in that an intermediate foil (10) is inserted between every two foils (1, 2) provided with the inclined grooves, which diverge towards the fluid inlet side, said intermediate foil having grooves (10a) which extend perpendicularly relative to the longitudinal axis (3) of the micromixer for the passage therethrough of a cooling or heating medium.

3. Mixer according to claim 1 or 2, characterised in that a microheat exchanger (11) communicates with the mixing chamber (7), said exchanger being traversed by channels (11a), which extend transversely relative to the direction of flow (C) for the discharge or supply of the reaction heat from or to its channels (11b) situated therebetween.

4. Mixer according to claim 1 or 2, characterised in that the mixing chamber is configured as microheat exchanger (12), which communicates directly with the guide component (13) and has channels (12c), which extend transversely relative to the direction of flow (C), in foils (12b), which abut against partial mixing chambers (12a), for the guidance of a cooling or heating medium.

## Revendications

1. Mélangeur statique comprenant au moins une chambre de mélange (7) et un composant de guidage (12), en amont pour l'alimentation des fluides (A, B) à mélanger vers la chambre de mélange (7), le composant de guidage (6) étant formé de plusieurs éléments (1, 2) superposés, traversés par les canaux (1b, 2b) inclinés par rapport à l'axe longitudinal (3) du micromélangeur, et les canaux (1b, 2b) d'éléments voisins (1, 2) se croisant sans contact et débouchant dans la chambre de mélange (7) ; les rangées (1a, 2a) des canaux (1b, 2b) formés par les éléments (1, 2) superposés, étant superposées de manière alignée avec des embouchures adjacentes à la chambre de mélange (7) pour y former une section commune, les rangées (1a, 2a) des canaux (1b, 2b) de l'élément voisin (12) divergeant de la section commune du côté d'entrée de fluide du composant de guidage (6) pour permettre l'alimentation séparée des fluides (A et B) à mélanger,
caractérisé en ce que :
a) les éléments du composant de guidage (6) sont formés de feuilles minces (1, 2) ayant une épaisseur d'environ 100 µm pour une longueur et une largeur du domaine du millimètre, dans lesquels est usiné chaque fois un faisceau de rainures (4, 5) étroitement voisines, et qui sont inclinées en alternance par rapport à l'axe longitudinal (3) du micromélangeur, ces rainures commençant à un grand côté de la feuille pour déboucher dans la zone médiane du grand côté opposée de la feuille, de façon qu'en superposant les feuilles (1, 2), il se forme chaque fois une rangée (1a, 2a) des canaux fermés (1b, 2b) pour conduire les fluides (A, B) à mélanger,
b) les rainures (4, 5) ont des largeurs < 250 µm, pour des épaisseurs de paroi des entretoises (4a, 5a) et des fonds de rainures (4b, 5b) < 70 µm, de sorte que dans la zone médiane, à laquelle arrivent les embouchures des canaux (1b, 2b) de la chambre de mélange (7), on arrive à une densité de quelques milliers d'embouchures par cm² ;
c) les feuilles (1, 2) superposées sont munies d'une plaque de recouvrement (6a, 6b) supérieure et/ou inférieure et sont reliées pour former une microstructure homogène, étanche au vide et résistant à la pression.

2. Mélangeur selon la revendication 1,
caractérisé en ce qu'
entre chaque fois deux feuilles (1, 2) avec des rainures inclinées, divergentes vers le côté d'entrée de fluide, on a une feuille intermédiaire (10) qui présente des rainures (10a) perpendiculaires à l'axe longitudinal du micromélangeur (3), pour le passage d'un fluide de refroidissement ou de chauffage.

3. Mélangeur selon la revendication 1 ou 2,
caractérisé par
un micro-échangeur de chaleur (11) relié à la chambre de mélange (7), traversée transversalement à la direction d'écoulement (C) par des canaux (11a), pour l'alimentation ou l'évacuation de la chaleur de réactions des canaux intermédiaires (11b).

4. Mélangeur selon la revendication 1 ou 2,
caractérisé en ce que
la chambre de mélange est réalisée comme micro-échangeur de chaleur (12) reliée directement au composant de guidage (13), et qui comporte des canaux (12c) dirigés transversalement à la direction d'écoulement (C) dans les feuilles (12a) adjacentes à la chambre de mélange partiel (12a), pour le passage d'un fluide de refroidissement ou de chauffage.
